# EUROPEAN PATENT APPLICATION

(11) **EP 4 613 507 A1**
(43) Date of publication of application: **10.09.2025**
(21) Application number: 23894236.1
(22) Date of filing: 11.09.2023
(51) Int. Cl.: B60C 5/00, B60C 19/12

(54) **PNEUMATIC TIRE**

(30) Priority: 24.11.2022 JP 2022187528
(71) Applicant: SUMITOMO RUBBER INDUSTRIES, LTD., Kobe-shi, Hyogo 651-0072 (JP)
(72) Inventor: SATO Takuya, Kobe-shi, Hyogo 651-0072 (JP); YUKAWA Naoki, Kobe-shi, Hyogo 651-0072 (JP); MATSUNAMI Sho, Kobe-shi, Hyogo 651-0072 (JP)
(74) Representative: Manitz Finsterwald Patent- und Rechtsanwaltspartnerschaft mbB
(86) International application number: PCT/JP2023/033098
(87) International publication number: WO 2024/111222

(57) **Abstract**

The present invention is a pneumatic tire 1 having a tread portion 2. The pneumatic tire 1 has a sponge-like sound absorbing body 5 disposed on an inner surface side of the tread portion 2. A ratio (H/T) between a hardness H (N) of the sound absorbing body 5 at 23 degrees C under 25% compression and a height T (mm) in the tire radial direction of the sound absorbing body 5 is 1.0 to 2.5. A ratio (T/W) of a width W (mm) in the tire axial direction and the height T (mm) of the sound absorbing body 5 is 0.25 to 1.20.

## Description

### Technical Field

The present invention relates to a pneumatic tire having a tread portion.

### Background Art

Heretofore, there are known pneumatic tires in which a sponge-like sound absorbing body is fixed to an inner surface side of the tread portion. For example, Patent document 1 below proposes a pneumatic tire in which road noise can be reduce over a long period of time by specifying the height and shape of a sound damping body, and the hardness, tensile strength and specific gravity of the sponge material.

### Prior art document

### Patent document

Patent document 1: Japanese Patent Application Publication No. 2006-306302

### Summary of the Invention

### Problems to be solved by the Invention

In the pneumatic tire to which the sound absorbing body is fixed, however, as the sponge-like sound absorbing body is fixed to the inner surface side of the tread portion, due to the effects of the increased cost, and increased weight and heat accumulation, performances such as cost performance, steering stability performance, low fuel consumption performance, durability and like may deteriorate, and thus, a pneumatic tire capable of more efficiently absorbing sound has been desired.

In view of the above-described actual situation, the present invention was devised, and its primary objective is to provide a pneumatic tire of which noise performance can be improved by efficiently absorbing sound.

### Means of solving the Problems

The present invention is a pneumatic tire having a tread portion, in which
a sponge-like sound absorbing body is disposed on an inner surface side of the tread portion,
a ratio (H/T) of a height T (mm) in the tire radial direction of the sound absorbing body and a hardness H (N) of the sound absorbing body at 23 degrees C under 25% compression is 1.0 to 2.5, and
a ratio (T/W) of a width W (mm) in the tire axial direction and the height T (mm) of the sound absorbing body is 0.25 to 1.20.

### Effect of the Invention

In the pneumatic tire of the present invention, by having the above-described configuration, sound can be efficiently absorbed and the noise performance is improved.

### Brief description of Drawing

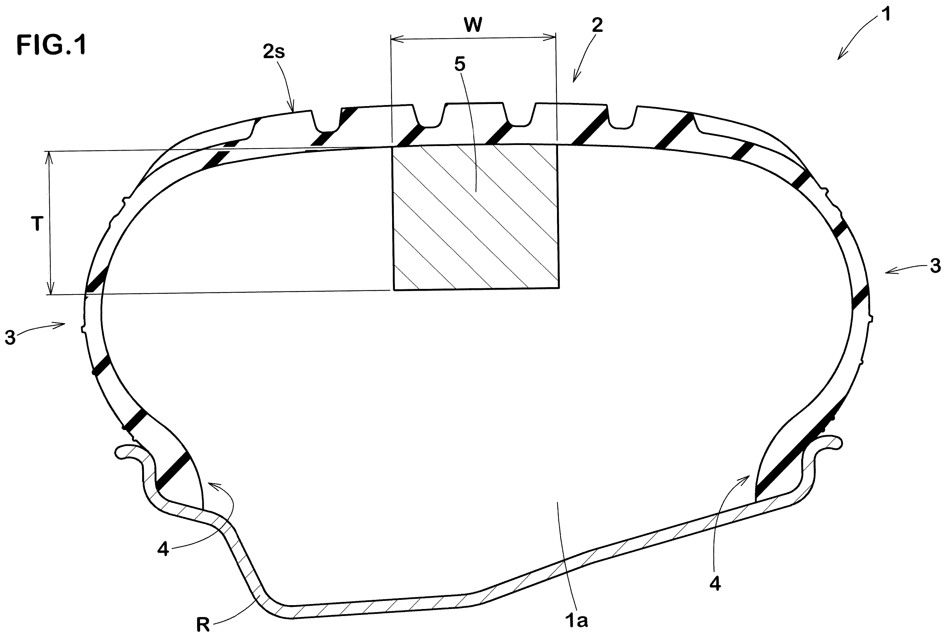

[Figure 1] a sectional view showing an embodiment of a pneumatic tire according to the present invention.

### Mode for carrying out the Invention

Hereinafter, an embodiment of the present invention will be described in detail based on the drawing.

Figure 1 is a tire-meridian cross-sectional view including the axis of rotation, showing a pneumatic tire 1 according to the present embodiment under a regular state.

Here, the "regular state" is an unloaded state in which the pneumatic tire 1 is mounted on a regular rim and adjusted to a regular internal pressure.

Hereinafter, a dimension of each portion of the pneumatic tire 1 refer to a value measured under this regular state unless otherwise noted.

When there is a standard system including standards on which the pneumatic tire 1 is based, the "regular rim" is a rim R defined for the each tire by the standards, for example, "standard rim" in JATMA, "Design Rim" in TRA, and "Measuring Rim" in ETRTO. When there is no standard system including standards on which the pneumatic tire 1 is based, the "regular rim" is a rim R having a smallest rim diameter and a smallest rim width among rims R that can be assembled without causing air leakage.

When there is a standard system including standards on which the pneumatic tire 1 is based, the "regular internal pressure" is an air pressure defined for the each tire by the standards, and it is the "maximum air pressure" in JATMA, the maximum value listed in the table "TIRE LOAD LIMITS AT VARIOUS COLD INFLATION PRESSURE" in TRA, and the "INFLATION PRESSURE" in ETRTO. When there is no standard system including standards on which the pneumatic tire 1 is based, the "regular internal pressure" is an air pressure determined for the each tire by a manufacturer or the like.

As shown in Figure 1, the pneumatic tire 1 of the present embodiment has
a tread portion 2 extending annularly,
a pair of sidewall portions 3 on both sides in the tire axial direction of the tread portion 2, and
a bead portion 4 on the inner side in the tire radial direction of each sidewall portion 3.

In the tread portion 2 in the present embodiment, the outer surface side in the tire radial direction constitutes a ground contacting surface 2s contacting with a road surface during running.

It is preferable that the sidewall portions 3 extend inward in the tire radial direction from both sides in the tire axial direction of the tread portion 2.

Between the tread portion 2 and the sidewall portion 3, for example, there is provided with a buttress portion.

The bead portion 4 includes, for example, a portion which comes into contact with the rim R when assembled with the rim.

In the pneumatic tire 1 of the present embodiment, on the inner surface side of the tread portion 2, a sponge-like sound absorbing body 5 is disposed.

It is preferable that the sponge-like sound absorbing body 5 is a porous material having a number of cells therein.

Such sound absorbing body 5 can absorb vibrations of a specific frequency band, and can improve the noise performance of the pneumatic tire 1.

The ratio (H/T) between a hardness H (N) of the sound absorbing body 5 at 23 degrees C under 25% compression. and a height T (mm) in the tire radial direction of the sound absorbing body 5 is preferably 1.0 to 2.5.

Further, the ratio (T/W) between a width W (mm) in the tire axial direction and the height T (mm) of the sound absorbing body 5 is preferably 0.25 to 1.20.

Here, the hardness H (N) at 23 degrees C under 25% compression means a value measured according to the rules of JIS K6400-2.

Such sound absorbing body 5 has a natural frequency close to the resonant frequency of the pneumatic tire 1, and by making it resonate with the pneumatic tire 1, it can attenuate the noise around 160 to 250 Hz, and can greatly improve the sound absorption efficiency. Therefore, the pneumatic tire 1 of the present embodiment can efficiently absorb sound and improve the noise performance.

That is, in the pneumatic tire 1 of the present embodiment, by limiting the dimensions and hardness of the sound absorbing body 5 to specific ratios,

it is possible to cause the pneumatic tire 1 and the sound absorbing body 5 to resonate without providing a separate weight or the like.

From this point of view, the ratio (H/T) between the hardness H (N) and the height T (mm) of the sound absorbing body 5 is more preferably 1.2 to 2.1.

Further, the ratio (T/W) between the width W (mm) and the height T (mm) of the sound absorbing body 5 is more preferably 0.65 to 1.13, and even more preferably 0.80 to 1.00.

As a more preferable embodiment, the sound absorbing body 5 is fixed to the inner surface side of the tread portion 2 via a double-sided tape, adhesive, tackiness agent or sealant. Such sound absorbing body 5 is easy to install and is useful for reducing manufacturing costs.

Meanwhile, the sound absorbing body 5 may be disposed, for example, without being fixed to the inner surface side of the tread portion 2.

The cross-sectional shape in the tire-meridian cross section, of the sound absorbing body 5 in the present embodiment is rectangular.

Such sound absorbing body 5 can easily resonate with the pneumatic tire 1, and can improve the sound absorption performance.

Moreover, such sound absorbing body 5 is easy to manufacture and is useful for reducing the manufacturing costs.

The sound absorbing body 5 in the present embodiment is provided continuously in the tire circumferential direction.

Such sound absorbing body 5 can exhibit the sound absorbing effect evenly over the entire circumference of the pneumatic tire 1.

The sound absorbing body 5 is not limited to such embodiment, and for example, it may have a discontinuous section in the tire circumferential direction, or a plurality of sound absorbing bodies 5 may be fixed.

The sound absorbing body 5 is, for example, formed from urethane foam.

The urethane foam may be one formed by a well-known manufacturing method.

Such sound absorbing body 5 can be selected from mass-produced products, which is useful for reducing the manufacturing costs.

The height T of the sound absorbing body 5 is preferably 10 to 80 mm.

Since the height T of the sound absorbing body 5 is not less than 10 mm, it becomes possible to make the sound absorbing body 5 to resonate with the pneumatic tire 1.

Since the height T of the sound absorbing body 5 to not more than 80 mm, it becomes possible to suppress the influence on the steering stability performance and on the assembly work to the rim R.

The number of cells in the sound absorbing body 5 is preferably 38 to 50 cells/25 mm. Here, the number of cells is a value measured according to Annex 1 of JIS K6400-1. Since the number of cells in the sound absorbing body 5 is not less than 38 cells/25 mm, it is possible to suppress the cell size from becoming excessively large, and prevent sound leakage to improve the sound absorption performance.

Since the number of cells of the sound absorbing body 5 is not more than 50 cells/25 mm, it is possible to suppress the cell size from becoming excessively small, and ensure a certain level of air permeability to improve the sound absorption performance.

The cross-sectional area of the sound absorbing body 5 in the tire-meridian cross section is preferably 5% to 15% of the cross-sectional area of the tire inner cavity 1a in the tire-meridian cross section.

Here, the cross-sectional area of the sound absorbing body 5 is an area determined from the outer shape including the internal hollow cells.

Further, the cross-sectional area of the tire inner cavity 1a is the area of the space surrounded by the inner surface of the pneumatic tire 1 under the regular state and the outer surface of the rim R.

Since the cross-sectional area of the sound absorbing body 5 is not less than 5% of the cross-sectional area of the tire inner cavity 1a, the sound absorbing effect of the sound absorbing body 5 can be reliably exerted.

Since the cross-sectional area of the sound absorbing body 5 is not more than 15% of the cross-sectional area of the tire inner cavity 1a, it is possible to suppress an increase in cost, an increase in weight and a heat accumulation effect caused by the sound absorbing body 5.

While detailed description has been made of an especially preferable embodiment of the present invention, the present invention can be embodied in various forms without being limited to the above-described embodiment.

### [Additional Statement]

The present invention is as follows.

### [Present Invention 1]

A pneumatic tire having a tread portion, wherein
a sponge-like sound absorbing body is disposed on an inner surface side of the tread portion,
a ratio (H/T) between a hardness H (N) of the sound absorbing body at 23 degrees C under 25% compression and a height T (mm) in the tire radial direction of the sound absorbing body is 1.0 to 2.5, and
a ratio (T/W) of the height T (mm) and a width W (mm) in the axial direction of the tire of the sound absorbing body is 0.25 to 1.20.

### [Present Invention 2]

The pneumatic tire as set forth in Present Invention 1, wherein
the ratio (H/T) of the sound absorbing body is 1.2 to 2.1.

### [Present Invention 3]

The pneumatic tire as set forth in Present Invention 1 or 2, wherein
the ratio (T/W) of the sound absorbing body is 0.65 to 1.13.

### [Present Invention 4]

The pneumatic tire as set forth in any one of Present Inventions 1 to 3, wherein
the number of cells of the sound absorbing body is 38 to 50 cells/25mm.

### [Present Invention 5]

The pneumatic tire as set forth in any one of Present Inventions 1 to 4, wherein
the cross-sectional shape of the sound absorbing body in the tire-meridian cross section is rectangular.

### [Present Invention 6]

The pneumatic tire as set forth in any one of Present Inventions 1 to 5, wherein
the cross-sectional area of the sound absorbing body in the tire-meridian cross section is 5% to 15% of the cross-sectional area of the tire inner cavity in the tire-meridian cross section.

### [Present Invention 7]

The pneumatic tire as set forth in any one of Present Inventions 1 to 6, wherein
the sound absorbing body is fixed to the inner surface side of the tread portion via a double-sided tape, adhesive, tackiness agent or sealant.

### [Present Invention 8]

The pneumatic tire as set forth in any one of Present Inventions 1 to 7, wherein
the sound absorbing body is formed from urethane foam.

### Description of the signs

1 Pneumatic tire
2 Tread portion
3 Sound absorbing body

## Claims

1. A pneumatic tire having a tread portion, wherein
a sponge-like sound absorbing body is disposed on an inner surface side of the tread portion,
a ratio (H/T) between a hardness H (N) of the sound absorbing body at 23 degrees C under 25% compression and a height T (mm) in the tire radial direction of the sound absorbing body is 1.0 to 2.5, and
a ratio (T/W) of the height T (mm) and a width W (mm) in the axial direction of the tire of the sound absorbing body is 0.25 to 1.20.

2. The pneumatic tire as set forth in claim 1, wherein
the ratio (H/T) of the sound absorbing body is 1.2 to 2.1.

3. The pneumatic tire as set forth in claim 2, wherein
the ratio (T/W) of the sound absorbing body is 0.65 to 1.13.

4. The pneumatic tire as set forth in any one of claims 1 to 3, wherein
the number of cells of the sound absorbing body is 38 to 50 cells/25mm.

5. The pneumatic tire as set forth in any one of claims 1 to 3, wherein
the cross-sectional shape of the sound absorbing body in the tire-meridian cross section is rectangular.

6. The pneumatic tire as set forth in any one of claims 1 to 3, wherein
the cross-sectional area of the sound absorbing body in the tire-meridian cross section is 5% to 15% of the cross-sectional area of the tire inner cavity in the tire-meridian cross section.

7. The pneumatic tire as set forth in any one of claims 1 to 3, wherein
the sound absorbing body is fixed to the inner surface side of the tread portion via a double-sided tape, adhesive, tackiness agent or sealant.

8. The pneumatic tire as set forth in any one of claims 1 to 3, wherein
the sound absorbing body is formed from urethane foam.
